# EUROPEAN PATENT SPECIFICATION

(11) **EP 3 429 816 B1**
(45) Date of publication and mention of the grant of the patent: **15.04.2020**
(21) Application number: 17711329.7
(22) Date of filing: 14.02.2017
(51) Int. Cl.: B65D 41/34

(54) **APPARATUS AND METHOD FOR INJECTION MOULDING A CAP WITH A TAMPER-PROOF RING AND SUCH A CAP WITH A TAMPER-PROOF RING**
VORRICHTUNG UND VERFAHREN ZUM SPRITZGIESSEN EINER VERSCHLUSSKAPPE MIT BRUCHSIEGELRING UND EINE SOLCHE VERSCHLUSSKAPPE MIT BRUCHSIEGELRING
DISPOSITIF ET PROCÉDÉ DE MOULAGE PAR INJECTION UN CAPUCHON AVEC COLLIER DE SCELLÉ ET UN TEL CAPUCHON AVEC COLLIER DE SCELLÉ

(30) Priority: 14.03.2016 IT UA20161621
(43) Date of publication of application: 23.01.2019
(73) Proprietor: Sacmi Cooperativa Meccanici Imola Societa' Cooperativa, 40026 Imola (BO) (IT)
(72) Inventor: ALBONETTI, Danilo, 40026 Imola (Bologna) (IT)
(74) Representative: Villanova, Massimo
(86) International application number: PCT/IB2017/050817
(87) International publication number: WO 2017/158450

(56) References cited:
- EP-A1- 2 343 246
- DE-B1- 1 508 639
- DE-U1- 8 231 160
- DE-U1-202015 101 522
- US-A- 5 685 443

## Description

### Background of the invention

The invention relates to a moulding method and apparatus, in particular for moulding a capsule with a safety device for closing a neck of a container, for example a capsule comprising a capsule body made of metallic material and a safety ring made of plastic material.

Specifically but not exclusively, the invention can be applied to moulding a capsule for closing a glass bottle, for example a capsule comprising a metal capsule body with a side wall coupled by screw coupling to a thread on the neck of the bottle.

Patent publication US 4511053 shows a capsule for closing a neck of a container, in which the capsule comprises a capsule body made of metallic material and a safety ring made of plastic material. The safety ring is moulded separately by injection of plastic material and is then assembled and dovetailed into the capsule body.

Patent publication US 5071339 shows a capsule comprising a capsule body made of metallic material and a manual grasping ring made of plastic material. The gripping ring is moulded directly by overmoulding on the capsule body.

It is desirable to improve the prior art, for example of the patent publication US 4511053, for moulding a capsule comprising a metal capsule body and a safety ring made of plastics. In particular, it is desirable to simplify and/or accelerate the various steps of the method, such as for example the assembly step. It would be further advantageous to improve the coupling strength between the metal capsule body and the safety ring made of plastics. It would also be desirable to save on the plastic material and/or the metallic material used to mould the capsule.

Patent publication US 5,685,443 shows a forming method according to the preamble of claim 1, wherein a mould has a central portion 67, an upper half-portion 61, a bottom half-portion 65, and a closed position with a first sealing area between the capsule body and the central portion 67, and a second sealing area between the capsule body and the upper half-portion 61, without contact between the capsule body and the bottom half-portion 65, whereby there is no sealing area in which the capsule body contacts both half-portions 61 and 65, nor any sealing area in which the central portion 67 contacts both half-portions 61 and 65.

Patent publication US 5,685,443 shows a forming apparatus according to the preamble of claim 6.

Patent publication DE 202015101522 U1 shows a metal screw cap with a plastic safety ring divided into segments by axial longitudinal slots and, in the lower limit region, by material bridges which are broken when the cap is unscrewed, whereby the segments are deformed outwardly passing over a ring projecting from the neck of the bottle. Further tamper-proof rings are disclosed in WO 20016/142 951, DE 32 06 245, JPS62 108 251U or JPS62 159 349.

### Summary of the invention

One object of the invention is to provide a moulding method that is able to overcome one or more of the aforesaid drawbacks of the prior art.

One advantage is to form, simply and cheaply, a capsule with a metal capsule body and a safety ring made of plastics.

One advantage is to increase the productivity of moulding capsules with a metal capsule body and a safety ring made of plastics.

One advantage is to economise on the plastic material and/or the metallic material used for forming capsules.

One advantage is to improve the coupling strength between the metal capsule body and the safety ring made of plastics.

One object of the invention is to make an apparatus for forming capsules with a metal capsule body and a safety ring made of plastics that is constructionally simple and cheap.

One object of the invention is to make available a capsule that is suitable for closing containers and comprising at least one metal capsule body and at least one safety ring made of plastics.

Such objects and advantages and still others are achieved by a method, an apparatus and a capsule according to one or more of the claims set out below.

In one embodiment, a method for moulding capsules (for example screw capsules) for tamperproof closing of containers comprises the step as defined in claim 1, i.e. arranging a capsule body (made of a first material, in particular of a metallic material, for example of aluminium) in a moulding cavity of a mould conformed and arranged for the overmoulding of a safety ring (made of a second material other than the first material, in particular of a plastic material) on the capsule body, in the moulding cavity there being defined at least one annular sealing zone of plastic material between a first internal surface of the capsule body and a first mould portion inserted into a central internal cavity of the capsule body, for overmoulding the safety ring, that will be anchored stably and strongly to the capsule body.

### Brief description of the drawings

The invention can be better understood and implemented with reference to the attached drawings that illustrate some embodiments thereof by way of non-limiting examples.
Figure 1 is a perspective view of a first embodiment of a capsule made with a method according to the invention.
Figure 2 is a half-section of a capsule body that is usable in the method for making the capsule in figure 1.
Figure 3 is a half-section of the capsule in figure 1.
Figure 4 is a diagram of a section of a moulding apparatus that is usable in the method for making the capsule in figure 1 in an operating configuration during the step of introducing the plastic material into the moulding cavity.
Figure 5 is the diagram of figure 4 in an operating configuration in which the moulding cavity has been filled with the plastic material.
Figure 6 is a diagram of a section of a cutting apparatus that is usable for forming the facilitated fracture zone in the capsule.
Figure 7 is a half-section of a second embodiment of a capsule made with a method according to the invention.
Figure 8 is a half-section of a third embodiment of a capsule made with a method according to the invention.
Figure 9 is a half-section of a fourth embodiment of a capsule made with a method according to the invention.
Figures 10 to 13 show four diagrams of as many embodiments of plants comprising the moulding apparatus of figure 4.
Figure 14 is a perspective view of a fifth embodiment of a capsule made with a method according to the invention.
Figure 15 is a side view of the capsule of figure 14.
Figure 16 is a section of the capsule of figure 14.
Figure 17 is a sectioned partial view of the capsule of figure 14.

### Detailed description

In this description identical elements that are common to the various illustrated embodiments have been indicated by the same numbering.

With 1 a capsule for closing containers has been indicated and is defined in claim 8, in particular containers provided with a neck, for example bottles made of glass, plastics or metal. The capsule may be, in particular, of the screw type. The capsule 1 may be provided, for example, with an inner thread (made, in particular, in a known manner) coupled with an outer thread on the neck of the container.

The capsule 1 may comprise, as in these embodiments, at least one capsule body 2 made at least partially of metallic material (for example of aluminium or alloys of aluminium or of another plastically deformable material). The capsule body 2 may comprise, in particular, at least one (upper) closing wall 3 intended for closing the container. The (central) closing wall 3 may comprise, for example, a disc-shaped wall. The capsule body 2 may comprise, in particular, at least one (side) annular wall 4 intended for a (screw) connection with the neck of the container. The annular wall 4 may comprise, for example, a skirt-shaped wall. The annular wall 4 may emerge from a perimeter of the closing wall 3.

The capsule body 2 may comprise a single piece of (metal) material that is plastically deformable, for example by drawing. The capsule body 2 may be made by drawing in a press (for example of known type).

The capsule 1 may comprise, as in these embodiments, at least one safety ring 5 at least partially made of plastic material (for example polyethylene, polypropylene, or another thermoplastic resin). The safety ring 5 may comprise, in particular, at least one connecting portion 6 connected (solidly constrained) to an annular edge of the annular wall 4. The safety ring 5 may comprise, in particular, at least one detachable portion 7 (of annular shape) connected to the connecting portion 6 by a weakening zone 8 (of annular shape) intended to be broken upon opening of the capsule 1. The detachable portion 7 may comprise, in particular, a fin portion 71 that is foldable inwardly that will form the abutting means that, in use, at the first opening of the capsule, by abutting on a protrusion of the neck of the container, will cause the weakening zone 8 to break.

With 9 a moulding apparatus has been indicated, in particular for moulding a capsule (such as, for example, the capsule 1) for closing containers, provided with a device (such as, for example, the safety ring 5) for tamperproofing the container. The moulding apparatus 9 is configured as defined in claim 6, in particular, to form a capsule 1 comprising a capsule body 2 made of a first material (metal) and a safety ring 5 made of a second material (plastics).

The moulding apparatus 9 may be an element of a moulding carousel that rotates around a (vertical) rotation axis and carries a plurality of moulding apparatuses, like the apparatus 9, angularly spaced apart from one another on a periphery of the carousel. The moulding carousel may be operationally associated with extruding means that supplies the plastic material and may be provided with removing means that, at each revolution of the carousel, removes, from a nozzle of the extruding means, at least one dose of plastic material for each moulding apparatus 9.

The moulding apparatus 9 may comprise, in particular, a first portion 10 of mould that is insertable into the capsule body 2. The first portion 10 of mould may comprise, as in this embodiment, a tubular body with a (cylindrical) outer surface having at least one diameter that is the same as a diameter of an inner surface of the capsule body 2 to go into contact with the inner surface and make a sealing zone to prevent leaking of the plastics, as will be explained below.

The moulding apparatus 9 may comprise, in particular, at least two half-portions 11 of mould (each in the shape of a half-ring) that may be arranged around the first (central) portion 10 of mould and around an end (edge) portion of the capsule body 2 to define a mould for overmoulding plastic material on said end portion.

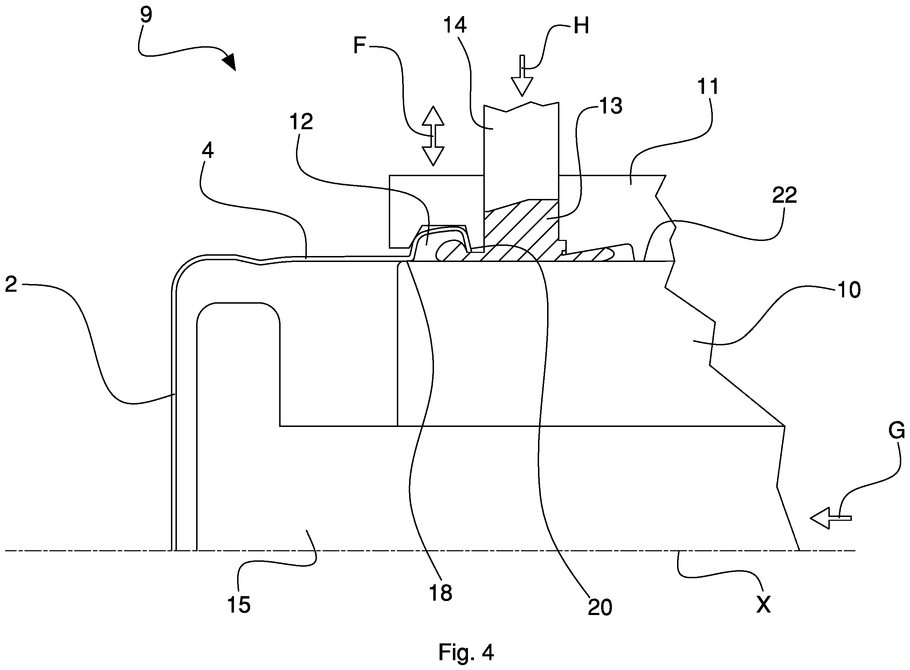

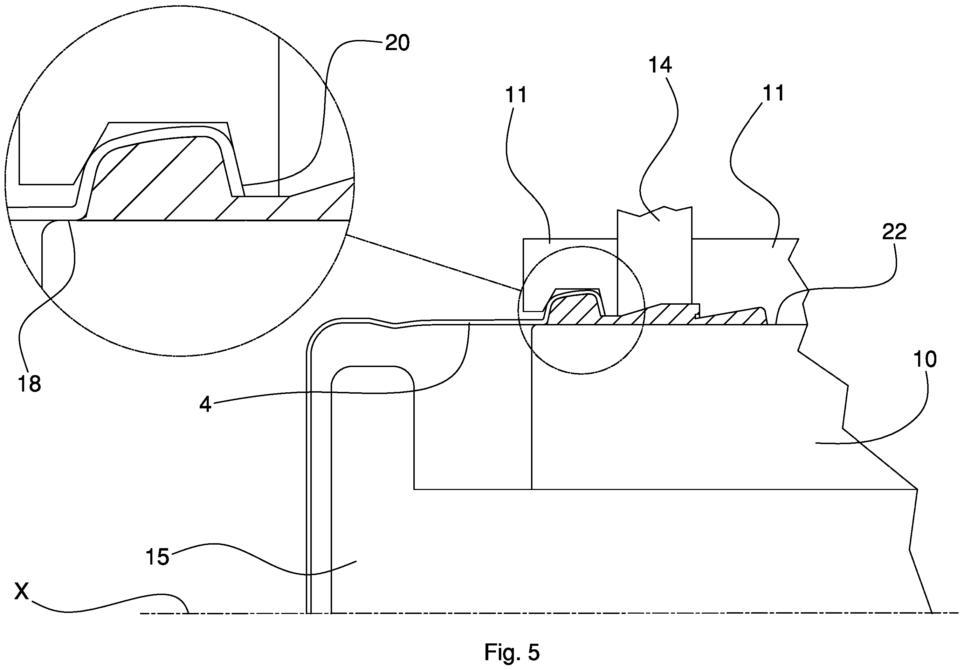

The two (or more) half-portions 11 of mould are movable in relation to one another (each according to a radial direction F, where radial is defined as a reference to an axis X of the moulding apparatus 9 coinciding with an axis X of the capsule when the latter is inserted into the apparatus), with the possibility of adopting at least one open position, in which the capsule body 2 is insertable between the two half portions 11 and the first portion 10 of mould, and at least one closed position (figures 4 and 5), in which the two half portions 11 and the first portion 10 of mould define a moulding cavity 12 that is suitable for overmoulding a safety ring 5 on the capsule body 2.

The axis X (of the apparatus 9 and of the capsule 1) may be oriented, for example, in a horizontal direction. Nevertheless, the aforesaid axis X may also be oriented in other directions, for example with a given tilt with respect to the horizontal.

The two half-portions 11 of mould (the opening and closing motion of which may comprise, for example, a linear mutual approach and distancing movement) may form, overall (when they are closed), a second (peripheral) moulding portion with a tubular shape that surrounds the first portion 10 of mould and which, in collaboration with the latter, defines the moulding cavity 12.

The moulding apparatus 9 may comprise, in particular, at least one inlet channel 13 that is obtained in at least one of the two half-portions 11 of mould and communicates with the moulding cavity 12.

The moulding apparatus 9 may comprise, in particular, supplying means for introducing a dose of plastic material inside the inlet channel 13. This supplying means (for example of known type) may comprise, in particular, extruding means (not shown) provided with at least one plastic material dispensing nozzle and separating means for separating a dose of material from the continuous flow dispensed through the nozzle.

The moulding apparatus 9 may comprise, in particular, at least one pushing element 14 (piston) that may be movable (in a direction H, by driving actuating means that is not shown, for example actuating means driven by cams) into the inlet channel 13 to fill the moulding cavity 12 with the plastic material. The pushing element 14 may be, for example, connected (fixed, rigidly connected, integrated, integral) with the means that separates the dose from the extruding means.

The moulding apparatus 9 may comprise, in particular, at least one extractor 15 that may slide (in an axial direction G) in a cavity inside the first portion 10 of mould to push the capsule body 2 (with the already moulded safety ring 5) and extract the capsule body 2 from the mould for subsequent processing.

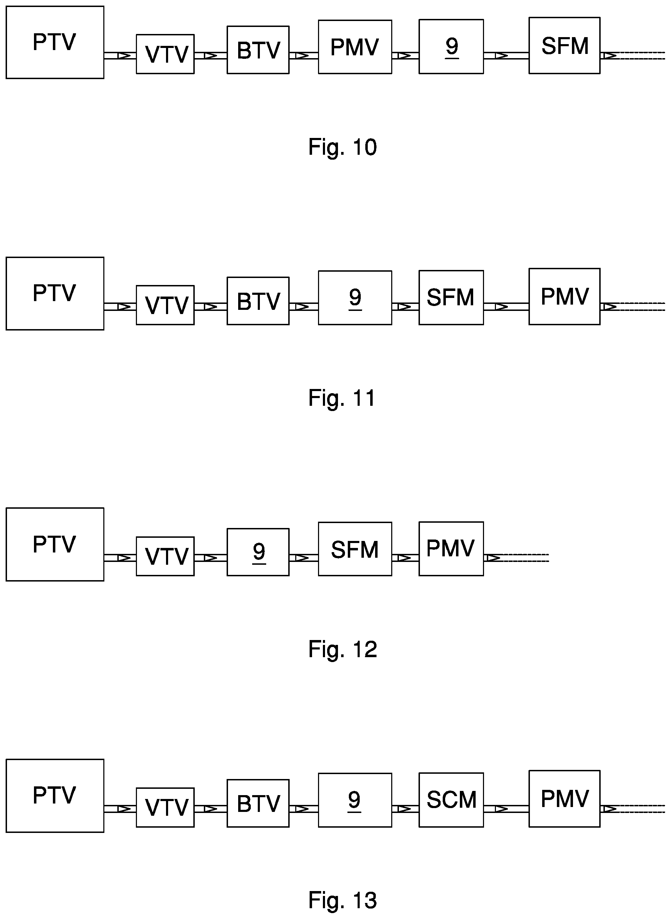

With reference to figures 10 to 13, certain diagrams of capsule moulding plants are illustrated that each comprise a production line that comprises various machines arranged in series one after the other. The production line may comprise, in particular, a continuous operating line.

The production line (figure 10) may comprise a screw cap press PTV (for example of known type) where the raw capsule bodies are formed from metal sheets. The production line may comprise, for example arranged downstream of the press PTV, a screw cap screen VTV (for example of known type) where separation between the raw capsule bodies and processing waste occurs.

The production line may comprise, for example arranged downstream of the press PTV and/or of the screen VTV, a screw cap edgebander BTV (for example of known type) where an annular edge of the capsule bodies is knurled to form a cap gripping zone. The production line may comprise, for example arranged downstream of the press PTV and/or of the screen VTV and/or of the edgebander BTV, a machine PMV for moulding seals (for example of known type) where the internal coating is formed that acts as a seal of the capsule on the container.

The production line may comprise, for example arranged downstream of the press PTV and/or of the screen VTV and/or of the edgebander BTV and/or of the machine PMV, at least one moulding apparatus 9 made according to the present invention for moulding the anti-tamper device (safety ring 5).

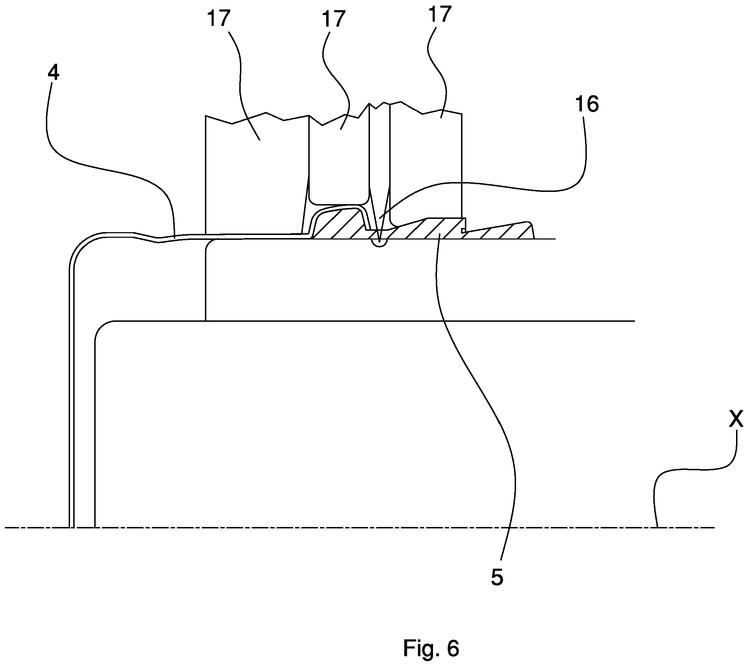

The production line may comprise, for example arranged downstream of the press PTV and/or of the screen VTV and/or of the edgebander BTV and/or of the machine PMV and/or of the apparatus 9, a cutting and/or moulding machine SFM (for example of known type) for cutting and/or folding the safety ring 5. The machine SFM may comprise a cutting apparatus (for example that of figure 6) with at least one blade 16 and a capsule stopping system 17 configured for retaining in position the capsule during cutting, for example a capsule stopping system of known type. The machine SFM may comprise a folding device (for example of known type) configured for folding inwardly at least one fin portion of the safety ring.

The screen VTV and/or the edgebander BTV and/or the machine PMV and/or the apparatus 9 and/or the machine SFM may each comprise a (continuously) rotating carousel that can carry a plurality of products (capsules or capsule bodies) arranged angularly spaced apart from one another and that has an inlet for receiving the products to be processed, a circular arch path, where the products are processed on the basis of the machining task to be performed, and an outlet of the processed products. The various carousels may be arranged in line one after the other so as to perform continuous processing.

The production line (figure 11) may comprise a machine PMV for moulding seals (for example of known type) that, as in the embodiment of figure 10, may be arranged downstream of the press PTV and/or of the screen VTV and/or of the edgebander BTV and/or of the apparatus 9 and/or of the cutting and/or moulding machine SFM.

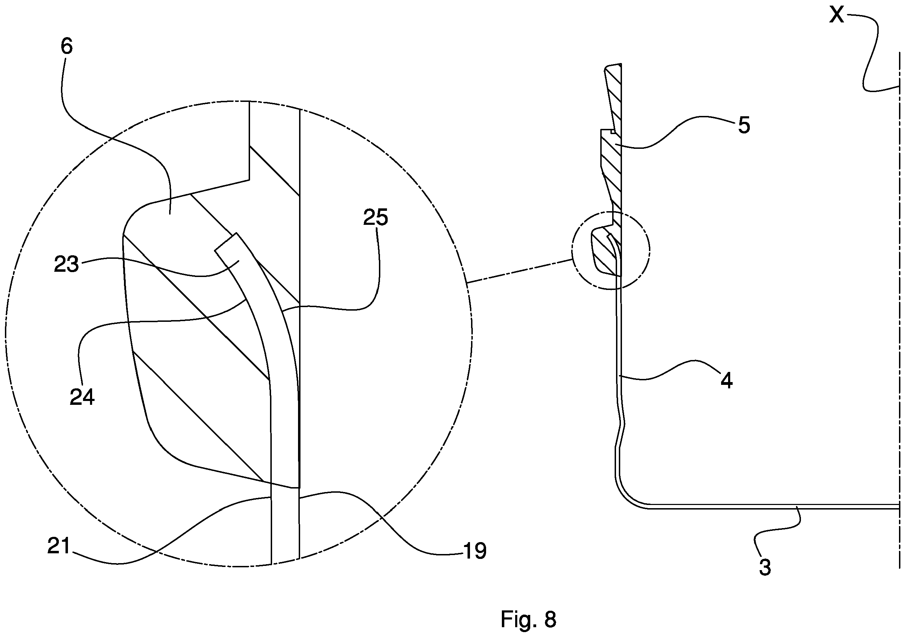

The production line (figure 12) may comprise a cutting and/or moulding machine SFM that may include in itself also the functions of a screw cap edgebander BTV, so that the machine SFM may comprise means for knurling an annular edge of the capsule bodies such as to form a cap gripping zone. This production line may be suitable, in particular, for forming the capsule in figure 8, which will be disclosed in greater detail below.

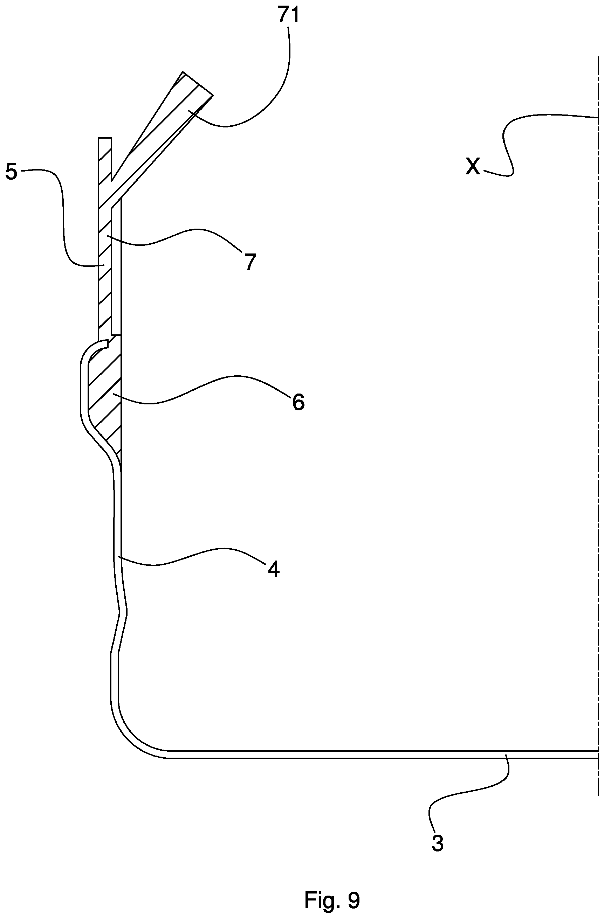

The production line (figure 13) may comprise, for example arranged downstream of the press PTV and/or of the screen VTV and/or of the edgebander BTV and/or of the apparatus 9, a cutting machine SCM (for example of known type) for cutting (without folding) the anti-tamper device (safety ring 5). This production line may be suitable, in particular, for forming the capsule in figure 9.

The operation of the moulding apparatus 9 may implement at least one part of a moulding method that, in particular, may comprise the following steps.

An (initial) step is providing the capsule body 2 comprising at least one annular wall 4 made of metallic material. This step may comprise, in particular, the process operations that are performed in the screw cap press PTV and/or in the screw cap screen VTV and/or in the screw cap edgebander BTV and/or in the machine PMV for moulding seals.

The capsule body 2 may then be arranged in the mould for forming the safety ring 5. In this step of arranging (inserting) the capsule body 2 in the moulding apparatus 9, the two half-portions 11 of mould may be arranged in an open configuration (half portions 11 of mould that are moved away from one another).

Owing to the subsequent closing of the two half-portions 11 of mould it is thus possible to define a moulding cavity 12 in the mould that is suitable for overmoulding the safety ring 5 on the annular wall 4. The step of overmoulding the safety ring 5 on the annular wall 4 may comprise, for example, introducing a dose of plastic material into the moulding cavity 12. The dose of plastic material may be separated from the extruding nozzle by at least one movable (cutting) separating element, that could be, for example, coupled with the pushing element 14. This dose is then inserted into the inlet channel 13. The pushing element 14 may then advance (in a direction H) to fill the moulding cavity 12.

The step of defining the moulding cavity 12 may comprise, in particular, defining three (annular) sealing zones to prevent leaks of plastic material from the moulding cavity 12. A first (annular) sealing zone 18 of the plastic material may be arranged between a first surface 19 (on the inner side) of the capsule body 2 and the first portion 10 of mould inserted into the capsule body 2. The aforesaid first surface 19 of the capsule body 2 may be arranged on the annular wall 4. A second (annular) sealing zone 20 of the plastic material may be arranged between a second surface 21 (on the outer side) of the capsule body 2 and the two half-portions 11 of mould. The aforesaid second surface 21 of the capsule body 2 may be arranged on the annular wall 4. A third (annular) sealing zone 22 of the plastic material may be arranged between the first portion 10 of mould and the two half-portions 11 of mould. Another sealing zone of the plastic material may be arranged between the pushing element 14 (piston) and the inlet channel 13 (chamber of the piston).

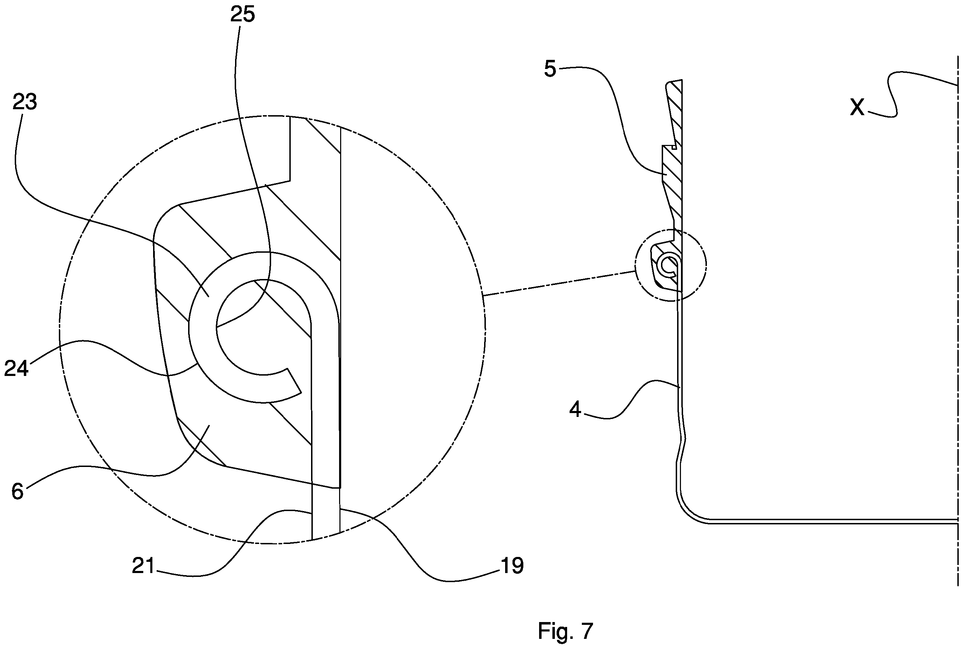

In the capsule embodiments shown in figures 7 and 8, at least one part of the connecting portion 6 contactingly surrounds at least one end portion 23 of the side annular wall 4. This end portion 23 may comprise, in particular, an annular edge embedded in the connecting portion 6 so as to have at least two annular surfaces, an outer surface 24 and an inner surface 25, in contact with the plastic material of the connecting portion 6, where "outer" and "inner" are defined with reference to a radial direction with respect to the axis X of the capsule. The end portion 23 may comprise, as in the embodiments of figures 7 and 8, a folded annular edge, in particular folded outwardly.

In other words, the annular wall 4 is immersed in the connecting portion 6 so as to have both opposite sides "wetted" by the plastics.

Embedding the end portion 23 enables a particularly tough and durable connection to be obtained between the capsule body 2 and the safety ring 5. Further, as the edge of the end portion 23 is immersed inside the connecting portion 6, the risk is reduced that a cutting or pointed edge of the metal capsule body 2 may prick a finger of a user.

The aforesaid annular edge may be folded, for example, so as to form a folded edge enclosed on itself, with a substantially ring-shaped section (figure 7), or a slightly folded edge, with an open section tilted by an angle comprised between 0° and 90°, or between 0° and 60°, or between 0° and 45°, or between 10° and 90°, or between 10° and 60°, or between 10° and 45°, with respect to the axis of the capsule (figure 8), or with a curved open section, for example radiating with a radius of more than 1 mm, or greater than 2 mm, or greater than 5 mm, or greater than 10 mm.

In figure 9 a capsule is shown in which the fin portion 71 of the detachable portion 7 is formed already partially folded inside the moulding cavity 12. In this case, the step of folding is facilitated and may be made in the seals moulding machine PMV (see plant in figure 13). The moulding apparatus may have, in this case, a further movable mould portion to enable the capsule to be extracted despite the undercut due to folding of the fin portion that is already inside the mould.

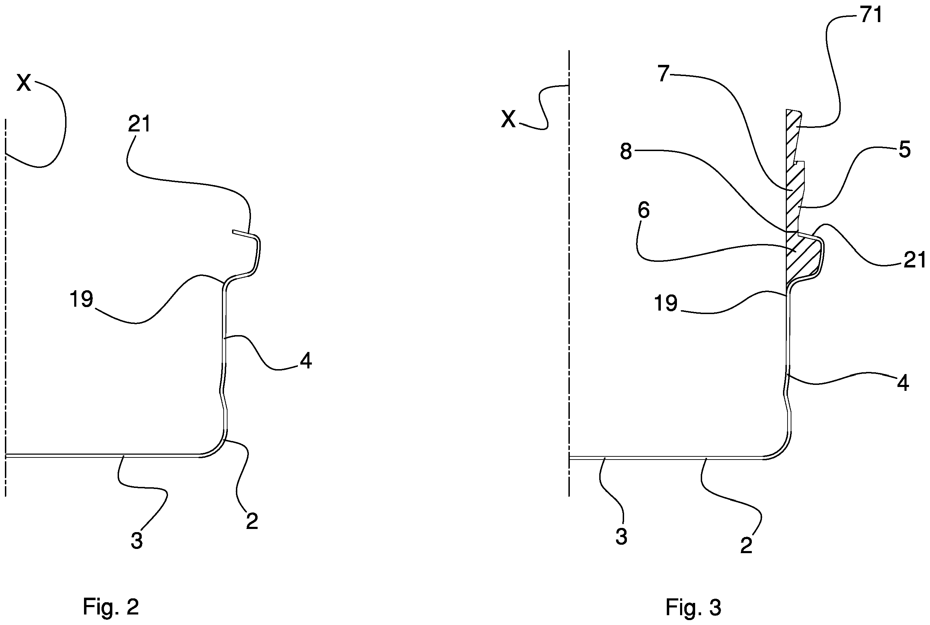

One end portion of the annular wall 4 may comprise, with particular reference to the embodiments of Figures 3 and 9, a concave annular edge towards the inside whose inner concave annular surface surrounds in contact and contains the connecting portion 6. The majority of the outer convex annular surface, or the entire outer convex annular surface, of the annular edge, may, as in these cases, not be in contact with the plastic material.

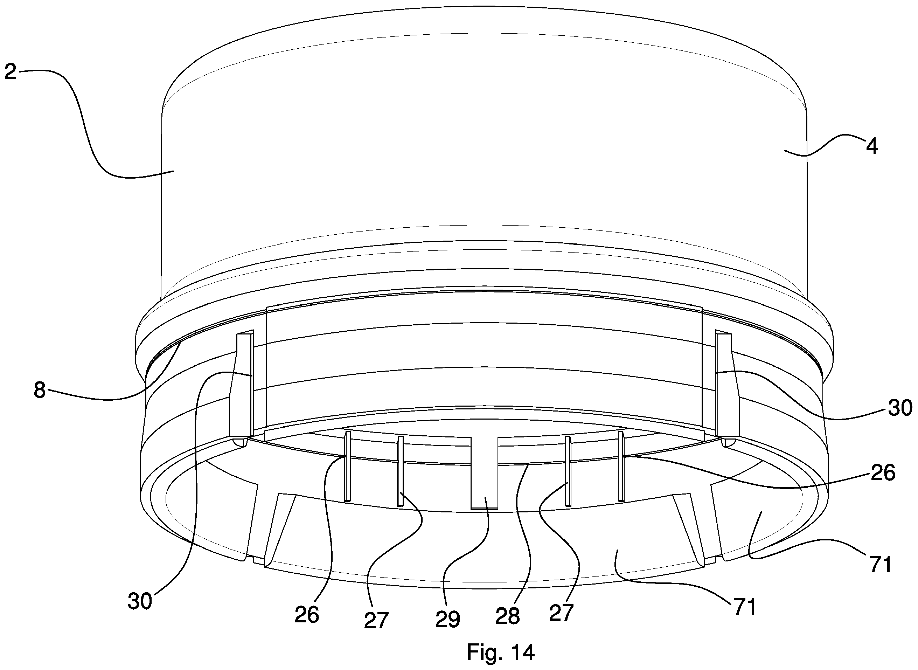

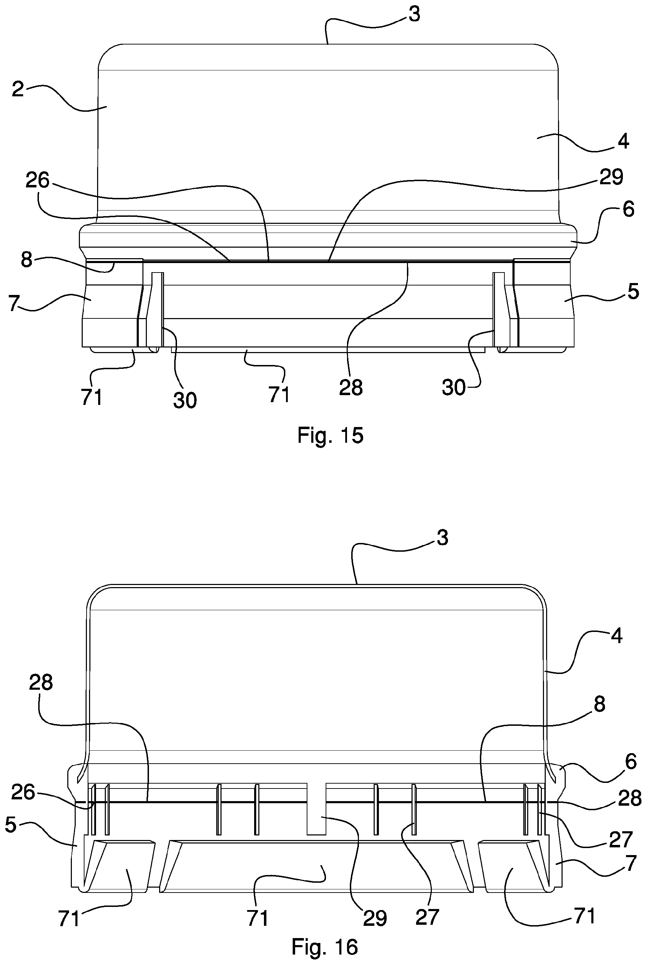

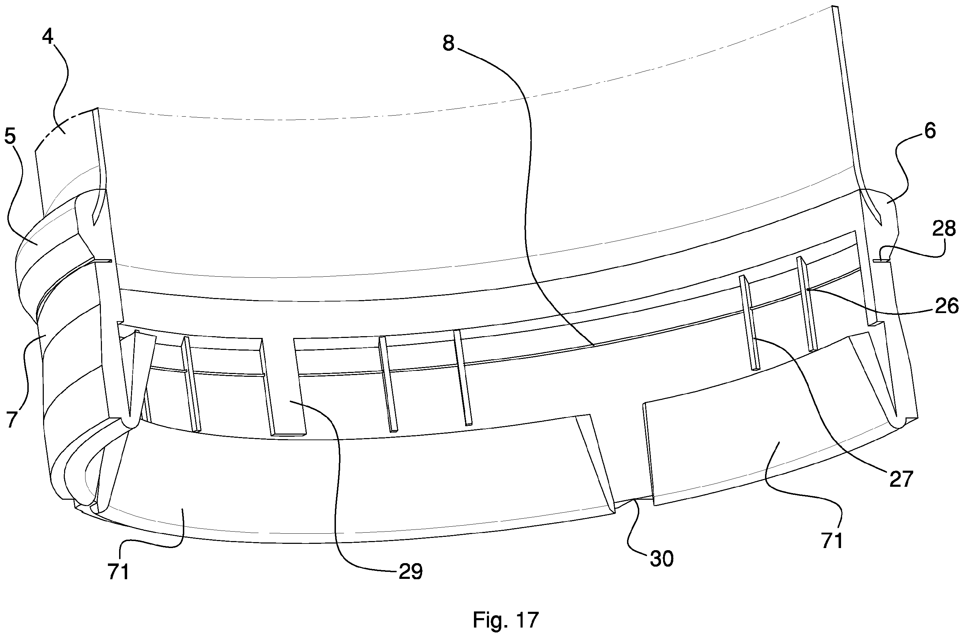

The capsule of the embodiment of Figures 14-17 may include, in particular, as in the previous examples, the capsule body 2, the closing wall 3, the annular wall 4, the safety ring 5, the connecting portion 6, the detachable portion 7, the weakening zone 8, the fin portion 71.

The weakening zone 8 may comprise, as also in the examples described above, a plurality of frangible bridges 26. In particular, the weakening zone 8 may comprise a plurality of ribs 27 extended longitudinally in the axial direction (in the direction of X-axis of the capsule) and at least one notch 28 (extended in the circumferential direction) that is passing through the greater part of the annular wall of the capsule, leaving intact the frangible bridges 26 in correspondence of the ribs 27. The ribs 27 and the notch 28 are shaped and dimensioned so as to generate frangible bridges 26 capable of breaking at the opening of the capsule.

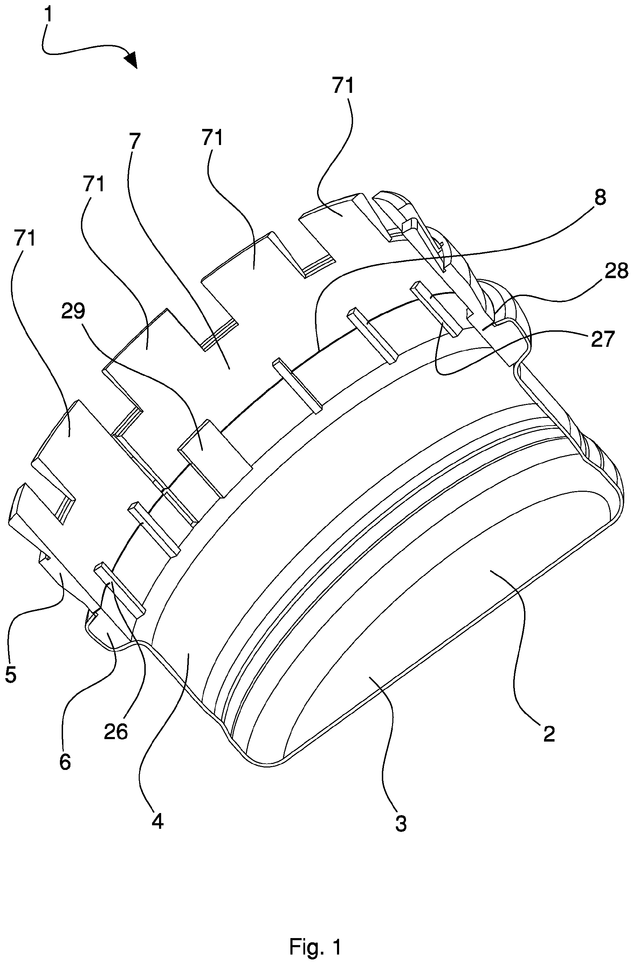

The capsule may comprise, as also in the example illustrated in Figure 1, at least one rib 29 longitudinally extended in the axial direction (in the X axis direction of the capsule), substantially parallel to and of greater dimensions with respect to the ribs 27. In the specific examples, the rib 29 has the same thickness of the ribs 27 and a greater width (of at least two, three, four, or more times). The rib 29 may be traversed in part from the notch 28. The rib 29 is designed so as not to break at the opening of the capsule, unlike the frangible bridges 26 of the ribs 27, whereby the detachable portion 7 is separated from the connecting portion 6 in correspondence of the bridges 26, but remains connected via the rib 29, so that when at the opening the cap is removed from the container, the detachable portion 7 remains attached to the rest of the capsule and thus does not remain on the container. The detachable portion 7 serves as a tamper-evident band comprising an annular wall connected to the connecting portion 6 by frangible means and by non-frangible means (in which the non-frangible means comprises, for example, at least one enlarged element not intended to breakage, as the rib 29), so that the tamper-evident band is not to depart completely from the rest of the capsule, but remains attached by non-frangible means. This is because the capsule, including the anti-tamper band, must not remain on the container (for example glass) that may be reused as well. The breaking of the bridges 26 still leaves a visible sign of openness with anti-tamper function.

The non-frangible means, which connect the tamper-evident band (detachable portion 7) with the connecting portion 6 (fixed to the metal capsule body 2), may comprise, in particular, two, three or more ribs 29. In the specific case four ribs 29 are arranged angularly spaced (at 90°).

The detachable portion 7 may comprise, in particular, at least one frangible line 30 that is continuous and longitudinally extended in the axial direction (parallel to the X axis of the capsule). The frangible line 30 may extend longitudinally, as in the example of figures 14-17, for the most part (more than half) of the axial length of the detachable portion 7. The frangible line 30 may extend, in particular, up to a lower end edge of the detachable portion 7, from which the folded inward fin portion 71 starts. The detachable portion 7 may comprise, in particular, a plurality of frangible lines 30. In this specific case four frangible lines 30 are arranged angularly spaced (at 90°).

Each frangible line 30 may comprise, as in the specific example, a thin wall arranged on the bottom of a longitudinal recessed portion formed on the outer surface of the detachable portion 7. Each frangible line 30 is located in correspondence with a discontinuity of the fin portion 71 (arranged inside), i.e. in an empty zone of separation between two adjacent fins. In the specific case, the fin portion 71 comprises a number (four) of fins arranged (inwardly folded) and circumferentially spaced from each other, equal to the number (four) of frangible lines 30. Each frangible line 30 may be arranged, as in this example, opposite to a zone where there is the gap separating two adjacent fins.

The non-frangible means, which keeps after opening the connection between the detachable portion 7 and the connecting portion 6, may comprise, in particular, a number (two or more, in this example, four) of ribs 29. The longitudinal frangible means may comprise, in particular, a number (two or more, in this example, four) of frangible lines 30. Each connecting rib 29 may be disposed, as in this example, in the circumferential space between two frangible lines 30, in particular substantially halfway between two frangible lines 30.

The fin portion 71 (folded inwardly) is intended, at the unscrewing of the cap, to go into contact with a projection on the neck of the container, which acts by abutment, so as to break the frangible means (bridges 26) arranged in the weakening zone 8 which divides the detachable portion 7 from the connecting portion 6. At the first opening of the container, the inwardly folded portion is hooked to the projection of the container, causing the rupture of the frangible bridges 26.

The detachable portion 7 is kept connected to the connecting portion 6, and thus to the capsule body 2, through the non-frangible means (ribs 29) of appropriate size so that the rupture does not occur.

The frangible means (lines 30) extending longitudinally on the detachable portion 7 (consisting of one or more non-through weakenings, for example, in the form of thin wall) is also intended to rupture on the first unscrewing of the cap. In particular, the longitudinal frangible means (lines 30) may be structured in such a way as to delimit two or more (in the specific case four) annular wall sectors which, at the breaking of the axial longitudinal frangible means, can expand to allow the opening of the capsule passing over a protrusion (annular) on the container neck.

After the breaking of the bridges 26, continuing the unscrewing of the cap, at a certain point the longitudinal frangible means (lines 30) is broken passing over the projection on the container neck and allowing the opening of the bottle.

## Claims

1. Moulding method comprising the steps of:
- providing a capsule body (2) comprising at least one annular wall (4) made of metallic material;
- arranging said capsule body (2) in a mould;
- defining a moulding cavity (12) in said mould that is suitable for overmoulding a safety ring (5) on said annular wall (4);
- overmoulding the safety ring (5) on said annular wall (4) by introducing a plastic material into said moulding cavity (12);
wherein said step of defining a moulding cavity (12) comprises:
- defining a first annular sealing zone (18) of the plastic material between a first surface (19) of said capsule body (2) and a first portion (10) of mould inserted into said capsule body (2);
**characterized in that** said step of defining a moulding cavity (12) comprises:
- defining a second annular sealing zone (20) of the plastic material between a second surface (21) of said capsule body (2) and at least two half-portions (11) of mould that are openable and closable relative to one another to allow the arrangement of said capsule body (2) in the mould;
- defining a third annular sealing zone (22) of the plastic material between said first portion (10) and said at least two half-portions (11) of mould.

2. Method according to claim 1, wherein said first surface (19) of said capsule body (2) is disposed on said annular wall (4) and/or wherein said second surface (21) of said capsule body (2) is disposed on said annular wall (4).

3. Method according to claim 1 or 2, comprising the step of weakening said safety ring (5) to form a facilitated fracture zone by means of a cutting apparatus and/or the step of folding inwards at least one fin portion (71) of said safety ring (5) by means of a folding apparatus.

4. Method according to claim 3, comprising the step of forming a seal on said capsule body (2) after said step of overmoulding and/or after said step of weakening and/or after said step of folding.

5. Method according to any one of the preceding claims, comprising the step of removing said capsule body (2) with said safety ring (5) from said first portion (10) of mould by an extractor (15) that slides internally to said first portion (10) of mould for pushing said capsule body (2).

6. Moulding apparatus, in particular to implement a method according to any one of the preceding claims, said apparatus comprising:
- a first portion (10) of mould that is insertable into a capsule body (2), a first annular sealing zone (18) for the plastic material being defined between said first portion (10) of mould inserted into the capsule body (2) and a first surface (19) of the capsule body (2);
- at least two half-portions (11) of mould which are arranged around said first portion (10) of mould and which are movable relative to one another with the possibility to assume at least one open position, in which the capsule body (2) is insertable between said at least two half-portions (11) and said first portion (10) of mould, and at least a closed position, in which said at least two half-portions (11) and said first portion (10) of mould define a moulding cavity (12) that is conformed and arranged for the overmoulding of a safety ring (5) on the capsule body (2);
- at least one inlet channel (13) obtained in at least one of said at least two half-portions (11) of mould and communicating with said moulding cavity (12);
- at least one pushing element (14) that is movable in said at least one inlet channel (13) to fill with plastic material said moulding cavity (12);
**characterized in that** in said closed position of said at least two half-portions (11) of mould, a second annular sealing zone (20) for the plastic material is defined between said at least two half-portions (11) of mould and a second surface (21) of the capsule body (2) and a third annular sealing zone (22) for the plastic material is defined between said at least two half-portions (11) of mould and said first portion (10).

7. Apparatus according to claim 6, comprising at least one extractor (15) that slides internally to said first portion (10) of mould to push the capsule body (2) and extract it from said first portion (10) of mould.

8. A container closure cap, in particular made with a method according to any one of the preceding claims, comprising:
- a capsule body (2) made of metallic material and comprising at least one closing wall (3) intended to close a container and an annular wall (4) intended for the connection with a neck of the container;
- a safety ring (5) made of plastic material and comprising at least one connecting portion (6) connected to said annular wall (4) and at least one detachable portion (7) connected to said connecting portion (6) through frangible means (26) destined in use to break at the opening of the capsule;
- non-frangible means for connecting said detachable portion (7) with said connecting portion (6), said non-frangible means comprising at least one rib (29) extending longitudinally in the direction of an axis (X) of the capsule, in such a way that at the opening of the container said detachable portion (7) remains connected to the rest of the capsule by means of said non-frangible means and it therefore does not remain on the container;
- at least one frangible line (30) extending longitudinally in the direction of said axis (X) of the capsule on said detachable portion (7) for at least half of the axial length of said detachable portion (7) and up to a bottom end edge of said detachable portion **characterised in that** said frangible means comprise bridges (26) each of which is disposed in a rib (27) longitudinally extending in direction of said axis (X) of the capsule and is defined by a notch (28) formed on said rib (27).

9. Capsule according to claim 8, wherein said detachable portion (7) comprises a fin portion (71) that is folded inwardly and is intended to come into contact with a protrusion of the container at the first opening of the capsule in a manner to cause the breaking of said frangible means (26).

10. Capsule according to claim 8 or 9, wherein said frangible line (30) comprises a thin continuous wall disposed on the bottom of a recessed portion formed on an outer surface of said detachable portion (7).

11. Capsule according to any one of claims 8 to 10, wherein said detachable portion (7) comprises a plurality of longitudinal axial frangible lines (30) arranged angularly spaced one to the other.

12. Capsule according to claim 11, wherein said axial longitudinal frangible lines (30) define annular wall sectors that, after breaking of the lines (30), can be separated one to the other and widen to allow the opening of the capsule passing over a projection on the container neck.

13. Capsule according to any one of claims 8 to 12, wherein said frangible line (30) is situated in front of a gap that separates two adjacent fins of a fin portion (71) of said detachable portion (7).

14. Capsule according to any one of claims 8 to 13, wherein an end portion of said annular wall (4) comprises an annular edge that is concave inwardly whose inner concave annular surface contactingly surrounds and contains said connecting portion (6) and whose outer convex annular surface is not, in whole or for the most part, in contact with the plastic material.

## Patentansprüche

1. Formungsverfahren, das die folgenden Schritte aufweist:
- Bereitstellen eines Kapselkörpers (2), der zumindest eine ringförmige Wandung (4) aufweist, die aus metallischem Material hergestellt ist;
- Anordnen des Kapselkörpers (2) in einer Form;
- Definieren einer Formungskavität (12) in der Form, die geeignet ist, einen Sicherungsring (5) auf die ringförmige Wandung (4) aufzuformen;
- Aufformen des Sicherungsrings (5) auf die ringförmige Wandung (4) durch Einbringen eines Kunststoffmaterials in die Formungskavität (12);
wobei der Schritt des Definierens einer Formungskavität (12) Folgendes aufweist:
- Definieren einer ersten ringförmigen Dichtungszone (18) des Kunststoffmaterials zwischen einer ersten Fläche (19) des Kapselkörpers (2) und einem ersten Teil (10) der Form, der in den Kapselkörper (2) eingebracht wird;
**dadurch gekennzeichnet, dass** der Schritt des Definierens einer Formungskavität (12) Folgendes aufweist:
- Definieren einer zweiten ringförmigen Dichtungszone (20) des Kunststoffmaterials zwischen einer zweiten Fläche (21) des Kapselkörpers (2) und zumindest zwei Halbteilen (11) der Form, die relativ zueinander zu öffnen und zu schließen sind, um die Anordnung des Kapselkörpers (2) in der Form zu ermöglichen;
- Definieren einer dritten ringförmigen Dichtungszone (22) des Kunststoffmaterials zwischen dem ersten Teil (10) und den zumindest zwei Halbteilen (11) der Form.

2. Verfahren gemäß Anspruch 1, wobei die erste Fläche (19) des Kapselkörpers (2) auf der ringförmigen Wandung (4) angeordnet ist und/oder wobei die zweite Fläche (21) des Kapselkörpers (2) auf der ringförmigen Wandung (4) angeordnet ist.

3. Verfahren gemäß Anspruch 1 oder 2, das den Schritt des Schwächens des Sicherungsrings (5) um eine Zone des begünstigten Brechens durch Mittel einer Schneideapparatur und/oder den Schritt des Nach-Innen-Faltens von zumindest einem Lamellenteil (71) des Sicherungsrings (5) durch Mittel einer Faltapparatur aufweist.

4. Verfahren gemäß Anspruch 3, das den Schritt des Formens einer Dichtung auf den Kapselkörper (2) nach dem Schritt des Aufformens und/oder nach dem Schritt des Schwächens und/oder nach dem Schritt des Faltens aufweist.

5. Verfahren gemäß einem der vorherigen Ansprüche, das den Schritt des Entfernens des Kapselkörpers (2) mit dem Sicherungsring (5) von dem ersten Teil (10) der Form durch eine Abziehvorrichtung (15) aufweist, die im Inneren zu dem ersten Teil (10) der Form gleitet, um den Kapselkörper (2) zu drücken.

6. Formungsapparatur, insbesondere zur Implementierung eines Verfahrens gemäß einem der vorherigen Ansprüche, wobei die Apparatur Folgendes aufweist:
- ein erstes Teil (10) einer Form, die in einen Kapselkörper (2) einbringbar ist, eine erste ringförmige Dichtungszone (18) für das Kunststoffmaterial, die zwischen dem ersten Teil (10) der Form, das in den Kapselkörper (2) eingesetzt wird, und einer ersten Fläche (19) des Kapselkörpers (2) definiert ist;
- zumindest zwei Halbteile (11) der Form, die um das erste Teil (10) der Form herum angeordnet sind und die relativ zueinander mit der Möglichkeit beweglich sind, um eine erste offene Position einzunehmen, in der der Kapselkörper (2) zwischen die zumindest zwei Halbteile (11) und das erste Teil (10) der Form einbringbar ist, und um zumindest eine geschlossene Position einzunehmen, in der die zumindest zwei Halbteile (11) und das erste Teil (10) der Form eine Formkavität (12) definieren, die angepasst und angeordnet ist, um einen Sicherungsring (5) auf den Kapselkörper (2) aufzuformen;
- zumindest einen Einlasskanal (13), der in zumindest einem der zumindest zwei Halbteile (11) der Form vorgesehen ist und mit der Formkavität (12) kommuniziert;
- zumindest ein Schiebeelement (14), das in dem zumindest einen Einlasskanal (13) beweglich ist, um die Formkavität (12) mit Kunststoffmaterial zu füllen;
**dadurch gekennzeichnet, dass** in der geschlossenen Position der zumindest zwei Halbteile (11) der Form eine zweite ringförmige Dichtungszone (20) für das Kunststoffmaterial zwischen den zumindest zwei Halbteilen (11) der Form und einer zweiten Fläche (21) des Kapselkörpers (2) definiert ist, und eine dritte ringförmige Dichtungszone (22) für das Kunststoffmaterial zwischen den zumindest zwei Halbteilen (11) der Form und dem ersten Teil (10) definiert ist.

7. Apparatur gemäß Anspruch 6, die zumindest eine Abziehvorrichtung (15) aufweist, die im Inneren zu dem ersten Teil (10) der Form gleitet, um den Kapselkörper (2) zu drücken und ihn von dem ersten Teil (10) der Form abzuziehen.

8. Verschlusskappe für einen Behälter, insbesondere hergestellt mit einem Verfahren gemäß einem der vorherigen Ansprüche, die Folgendes aufweist:
- einen Kapselkörper (2), der aus einem metallischen Material hergestellt ist und zumindest eine verschließende Wandung (3), die vorgesehen ist, um einen Behälter zu verschließen, sowie eine ringförmige Wandung (4) aufweist, die für die Verbindung mit einem Hals des Behälters vorgesehen ist;
- einen Sicherungsring (5), der aus Kunststoffmaterial hergestellt ist und zumindest ein Verbindungsteil (6), das mit der ringförmigen Wandung (4) verbunden ist, sowie zumindest ein abnehmbares Teil (7) aufweist, das mit dem Verbindungsteil (6) über zerbrechliche Mittel (6) verbunden ist, die bestimmt sind, um bei Benutzung an der Öffnung der Kapsel zu brechen;
- nicht zerbrechliche Mittel zur Verbindung des abnehmbaren Teils (7) mit dem Verbindungsteil (6), wobei die nicht zerbrechlichen Mittel zumindest eine Rippe (29) aufweisen, die sich längs in Richtung einer Achse (X) der Kapsel erstreckt, dergestalt, dass an der Öffnung des Behälters das abnehmbare Teil (7) mit dem Rest der Kapsel über Mittel der nicht zerbrechlichen Mittel verbunden bleibt und deshalb nicht auf dem Behälter verbleibt;
- zumindest eine Bruchlinie (30), die sich längs in Richtung der Achse (X) der Kapsel auf dem abnehmbaren Teil (7) über zumindest die Hälfte der axialen Länge des abnehmbaren Teils (7) und bis zu einer bodenseitigen Endkante des abnehmbaren Teils erstreckt, **dadurch gekennzeichnet, dass** die zerbrechlichen Mittel Brücken (26) aufweisen, von denen jede in einer Rippe (27) angeordnet ist, die sich längs in Richtung der Achse (X) der Kapsel erstreckt und durch eine Kerbe (28) definiert ist, die auf der Rippe (27) gebildet ist.

9. Kapsel gemäß Anspruch 8, wobei das abnehmbare Teil (7) ein Lamellenteil (71) aufweist, das nach innen gefaltet ist, und dazu vorgesehen ist, um mit einer Vorwölbung des Behälters an der ersten Öffnung der Kapsel auf solch eine Weise in Kontakt zu kommen, um das Brechen der zerbrechlichen Mittel (26) zu bewirken.

10. Kapsel gemäß Anspruch 8 oder 9, wobei die Bruchlinie (30) eine dünne kontinuierliche Wand aufweist, die auf dem Boden eines vertieften Teils angeordnet ist, das auf einer äußeren Fläche des abnehmbaren Teils (7) geformt ist.

11. Kapsel gemäß einem der Ansprüche 8 bis 10, wobei das abnehmbare Teil (7) eine Vielzahl von längs gerichteten axialen Bruchlinien (30) aufweist, die winklig voneinander beabstandet angeordnet sind.

12. Kapsel gemäß Anspruch 11, wobei die axialen längs gerichteten Bruchlinien (30) ringförmige Wandsektoren definieren, die nach dem Brechen der Linien (30) voneinander getrennt werden und sich erweitern können, um die Öffnung der Kapsel über einen Vorsprung auf dem Behälterhals zu ermöglichen.

13. Kapsel gemäß einem der Ansprüche 8 bis 12, wobei die Bruchlinie (30) vor einem Spalt angeordnet ist, der zwei benachbarte Rippen eines Lamellenteils (71) des abnehmbaren Teils (7) trennt.

14. Kapsel gemäß einem der Ansprüche 8 bis 13, wobei ein Endteil der ringförmigen Wandung (4) eine ringförmige Kante aufweist, die nach innen konkav ist, deren innere konkave Ringfläche das Verbindungsteil (6) kontaktierend umgibt und enthält, und deren äußere konvexe Ringfläche insgesamt oder für den größten Teil nicht mit dem Kunststoffmaterial in Kontakt ist.

## Revendications

1. Procédé de moulage comprenant les étapes suivantes :
- prévoir un corps de capsule (2) comprenant au moins une paroi annulaire (4) en matériau métallique ;
- disposer ledit corps de capsule (2) dans un moule ;
- définir une cavité de moulage (12) dans ledit moule qui soit appropriée pour le surmoulage d'une bague de sécurité (5) sur ladite paroi annulaire (4) ;
- surmouler la bague de sécurité (5) sur ladite paroi annulaire (4) en introduisant une matière plastique dans ladite cavité de moulage (12) ;
dans lequel ladite étape de définition d'une cavité de moule (12) comprend :
- définir une première zone d'étanchéité annulaire (18) de la matière plastique entre une première surface (19) dudit corps de capsule (2) et une première partie (10) de moule insérée dans ledit corps de capsule (2) ;
**caractérisé en ce que** ladite étape de définition d'une cavité de moule (12) comprend :
- définir une deuxième zone d'étanchéité annulaire (20) de la matière plastique entre une deuxième surface (21) dudit corps de capsule (2) et au moins deux moitiés (11) de moule qui sont aptes à être ouvertes et fermées l'une par rapport à l'autre pour permettre de disposer ledit corps de capsule (2) dans le moule ;
- disposer une troisième zone d'étanchéité annulaire (22) de la matière plastique entre ladite première partie (10) et lesdites au moins deux moitiés (11) de moule.

2. Procédé selon la revendication 1, dans lequel ladite première surface (19) dudit corps de capsule (2) est disposé sur ladite paroi annulaire (4) et/ou dans lequel ladite deuxième surface (21) dudit corps de capsule (2) est disposée sur ladite paroi annulaire (4).

3. Procédé selon la revendication 1 ou 2, comprenant l'étape d'affaiblissement de ladite bague de sécurité (5) pour former une zone de fracture facilitée à l'aide d'un appareil de coupe et/ou l'étape de pliage vers l'intérieur d'une partie formant ailette (71) de ladite bague de sécurité (5) à l'aide d'un appareil de pliage.

4. Procédé selon la revendication 3, comprenant l'étape de formation d'un joint d'étanchéité sur ledit corps de capsule (2) après ladite étape de surmoulage et/ou après ladite étape d'affaiblissement et/ou après ladite étape de pliage.

5. Procédé selon l'une quelconque des revendications précédentes, comprenant l'étape d'enlèvement dudit corps de capsule (2), avec la bague de sécurité (5), de ladite première partie (10) de moule par un extracteur (15) qui glisse intérieurement vers ladite première partie (10) de moule pour pousser ledit corps de capsule (2).

6. Appareil de moulage, en particulier pour mettre en œuvre un procédé selon l'une quelconque des revendications précédentes, ledit appareil comprenant :
- une première partie (10) de moulage qui est apte à être insérée dans un corps de capsule (2), une première zone d'étanchéité annulaire (18) pour la matière plastique étant définie entre ladite première partie (10) de moule insérée dans le corps de capsule (2) et une première surface (19) du corps de capsule (2) ;
- au moins deux moitiés (11) de moule qui sont disposées autour de ladite première partie (10) de moule et qui sont mobiles l'une par rapport à l'autre avec la possibilité d'adopter au moins une position ouverte dans laquelle le corps de capsule (2) est apte à être inséré entre lesdites au moins deux moitiés (11) et ladite première partie (10) de moule, et au moins une position fermée dans laquelle lesdites au moins deux moitiés (11) et ladite première partie (10) de moule définissent une cavité de moulage (12) qui est formée et disposée pour le surmoulage d'une bague de sécurité (5) sur le corps de capsule (2) ;
- au moins un canal d'entrée (13) obtenu dans l'une au moins des au moins deux moitiés (11) de moule et communiquant avec ladite cavité de moulage (12) ;
- au moins un élément de poussée (14) qui est mobile dans ledit au moins un canal d'entrée (13) pour remplir de matière plastique ladite cavité de moulage (12) ;
**caractérisé en ce que** dans ladite position fermée desdites au moins deux moitiés (11) de moule, une deuxième zone d'étanchéité annulaire (20) pour la matière plastique est définie entre lesdites au moins deux moitiés (11) de moule et une deuxième surface (21) du corps de capsule (2), et une troisième zone d'étanchéité annulaire (22) pour la matière plastique est définie entre lesdites au moins deux moitiés (11) de moule et ladite première partie (10).

7. Appareil selon la revendication 6, comprenant au moins un extracteur (15) qui glisse intérieurement vers ladite première partie (10) de moule pour pousser le corps de capsule (2) et l'extraire de ladite première partie (10) de moule.

8. Couvercle de fermeture de récipient, en particulier fabriqué avec un procédé selon l'une quelconque des revendications précédentes, comprenant :
- un corps de capsule (2) en matériau métallique et comprenant au moins une paroi de fermeture (3) destinée à fermer un récipient, et une paroi annulaire (4) destinée à la liaison avec un goulot du récipient ;
- une bague de sécurité (5) en matière plastique et comprenant au moins une partie de liaison (6) reliée à ladite paroi annulaire (4) et au moins une partie amovible (7) reliée à ladite partie de liaison (6) par des moyens cassants (26) destinés, lors de l'utilisation, à se casser lors de l'ouverture de la capsule ;
- des moyens non cassants pour relier ladite partie amovible (7) à ladite partie de liaison (6), lesdits moyens non cassants comprenant au moins un rebord (29) s'étendant longitudinalement dans la direction d'un axe (X) de la capsule, de telle sorte que lors de l'ouverture du récipient ladite partie amovible (7) reste reliée au reste de la capsule à l'aide desdits moyens non cassants et ne reste donc pas sur le récipient ;
- au moins une ligne cassante (30) s'étendant longitudinalement dans la direction dudit axe (X) de la capsule sur ladite partie amovible (7) pour au moins la moitié de la longueur axiale de ladite partie amovible (7) et jusqu'à un bord d'extrémité inférieur de ladite partie amovible,
**caractérisé en ce que** lesdits moyens cassants comprennent des ponts (26) qui sont disposés chacun dans un rebord (27) s'étendant longitudinalement dans la direction dudit axe (X) de la capsule et définis chacun par une encoche (28) formée sur ledit rebord (27).

9. Capsule selon la revendication 8, dans laquelle ladite partie amovible (7) comprend une partie formant ailette (71) qui est pliée vers l'intérieur et qui est destinée à venir en contact avec une saillie du récipient lors de la première ouverture de la capsule de manière à provoquer la rupture desdits moyens cassants (26).

10. Capsule selon la revendication 8 ou 9, dans laquelle ladite ligne cassante (30) comprend une mince paroi continue disposée sur le fond d'une partie en creux formée sur une surface extérieure de ladite partie amovible (7).

11. Capsule selon l'une quelconque des revendications 8 à 10, dans laquelle ladite partie amovible (7) comprend une pluralité de lignes cassantes axiales longitudinales (30) espacées angulairement les unes des autres.

12. Capsule selon la revendication 11, dans laquelle lesdites lignes cassantes longitudinales axiales (30) définissent des secteurs de paroi annulaire qui, après la rupture des lignes (30), peuvent être séparés les uns des autres et s'élargir pour permettre l'ouverture de la capsule en passant par-dessus une saillie sur le goulot du récipient.

13. Capsule selon l'une quelconque des revendications 8 à 12, dans laquelle ladite ligne cassante (30) est située devant un espace qui sépare deux ailettes adjacentes d'une partie formant ailette (71) de ladite partie amovible (7).

14. Capsule selon l'une quelconque des revendications 8 à 13, dans laquelle une partie d'extrémité de ladite paroi annulaire (4) comprend un bord annulaire qui est concave vers l'intérieur, dont la surface annulaire concave intérieure entoure avec contact et contient ladite partie de liaison (6) et dont la surface annulaire convexe extérieure n'est pas, dans son ensemble ou pour la plupart, en contact avec la matière plastique.
